## Europäisches Patentamt

## European Patent Office

## Office européen des brevets

(11) Publication number: **0 160 325**
**B1**

(12) **EUROPEAN PATENT SPECIFICATION**

(45) Date of publication of patent specification: **01.07.87**

(21) Application number: **85200277.3**

(22) Date of filing: **28.02.85**

(51) Int. Cl.⁴: **B 01 D 53/04,** A 23 L 3/34, A 23 B 7/148

(54) **Method and apparatus for controlling the Co₂/O₂ concentrations of a space for example a cooling cell.**

(30) Priority: **01.03.84 NL 8400669**

(43) Date of publication of application:
**06.11.85 Bulletin 85/45**

(45) Publication of the grant of the patent:
**01.07.87 Bulletin 87/27**

(84) Designated Contracting States:
**AT BE CH DE FR GB IT LI LU NL SE**

(56) References cited:
FR-A-2 523 472
US-A-3 368 873
US-A-3 981 698
US-A-4 228 197
US-A-4 303 009

(73) Proprietor: **Besseling, Anthonius Everardus**
**Oosterblokker 18**
**NL-1696 BH Oosterblokker (NL)**
(73) Proprietor: **Van Amerongen, Teunis Cornelis**
**Oude Dijk 4**
**NL-4051 CP Ochten (NL)**

(72) Inventor: **Besseling, Anthonius Everardus**
**Oosterblokker 18**
**NL-1696 BH Oosterblokker (NL)**
Inventor: **Van Amerongen, Teunis Cornelis**
**Oude Dijk 4**
**NL-4051 CP Ochten (NL)**

(74) Representative: **Schumann, Bernard Herman**
**Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a method of controlling the $CO_2/O_2$ concentrations of a gas mixture in at least one space, for example, a cooling cell intended for storing horticultural products, comprising the alternating performance of an adsorption mixture and of a regenerating process in which $CO_2$ adsorbed at the adsorption material is removed from the adsorption material with the aid of air.

Such a method is known and is employed, for example, in cold storage houses or other spaces in which horticultural products is stored. The storage duration of the horticultural products depends not only on the store temperature but also on the $CO_2/O_2$ concentrations of the gas mixture in the cold storage house.

During storage the horticular products consume oxygen and give off by metabolism heat, moisture and $CO_2$. By reducing the $CO_2/O_2$ concentrations of the gas mixture the respiration of the horticultural products is decelerated so that on the one hand the storage duration is prolonged and on the other hand, particularly by the $O_2$ concentration the incidence of diseases and/or faults of the horticultural products is limited.

If the sum of the $CO_2$ and $O_2$ concentrations in the gas mixture of the cooling cell has to be chosen to be lower than the oxygen concentration of the open air in the so-called scrubbed CA storage, it is necessary to remove the excess $CO_2$ from the gas mixture. This removal of $CO_2$ is performed by a gas adsorption process, for example, with the aid of an active carbon scrubber system.

During the adsorption process the gas mixture is guided out of the cooling cell through the active carbon, on which $CO_2$ is adsorbed, whilst the $CO_2$ lean gas mixture is fed back to the space. After a given time the adsorption material has to be regenerated, which is done by passing open air through the adsorption material so that $CO_2$ desorbs and the $CO_2$ rich open air mixture is conducted away to the ambient air.

A disadvantage of this method is that the $O_2$ adsorbed at the carbon during the regeneration process or present in the interstices between the carbon particles during the $CO_2$ adsorption process is released and fed to the cooling cell so that the $O_2$ concentration therein increases. The ratio between the amount of $CO_2$ extracted from the space and the amount of $O_2$ fed to the space determines to a considerable extent whether at a lower $CO_2$ concentration of the gas mixture in the space at the same time a low $O_2$ concentration can be obtained.

In U.S. Patent Specifications 3.981.698, 4.228.197 and 4.303.009 (corresponding with FR—A—2.421.560) it is recognized that at the change-over from the adsorption process to the regeneration process the gas mixture being in contact with the adsorption material is relatively poor in $O_2$ and relatively rich in $N_2$. In said Patent Specifications the gas mixture is additionally fed at the beginning of the regeneration process starting by air flushing to the space which is thus subjected to excess pressure. The value of the excess pressure depends on the ratio between the added volume and the volume of the space.

At the change-over from the regeneration process to the adsorption process the situation is inverse: gas is extracted from the space for removing the gas mixture being in contact with the adsorption material and then being relatively rich in oxygen from the space. Thus the space is subjected to subatmospheric pressure.

Measurements have shown that such spaces, for example, cold storage houses, which may be considered to be particularly leakage-tight, have at least one leak of 1 cm². This means that the valuable gas mixture fed to the space and being relatively poor in oxygen has volatilized for an important part because during the regeneration process the excess pressure drastically decreases. During the time of subatmospheric pressure in the space atmospheric pressure will penetrate into the space, which results in a rapid rise of the oxygen concentration. The known method described above thus utilizes only a very low percentage of the valuable gas mixture relatively poor in oxygen.

FR 2.523.472 describes an apparatus comprising two adsorption units. These adsorption units can be connected with one another in a closed circuit so that the gas mixtures in the adsorption units having an oxygen concentration of about 20,8% and 3% respectively are mixed with one another and each have a mean oxygen concentration of about 12%. Although in this way an improvement in efficiency is obtained as far as the use of the gas mixture relatively poor in oxygen at the change-over from the adsorption process to the regeneration process is concerned, this known apparatus requires two adsorption units, which materially raises the costs.

The invention has for its object to better utilize the gas mixture relatively poor in oxygen available at the end of the adsorption process so that the $CO_2/O_2$ concentrations to be maintained in the space are more rapidly attained and be maintained at lower costs.

According to the invention this is achieved in that at the beginning of the regeneration process at least part of the gas mixture having been in contact with the adsorption material is stored and in that at the termination of the regeneration process the adsorption material is flushed with at least part of the stored gas mixture, whilst the gas released during flushing is passed to the atmosphere.

When the flushing gas is directly fed to the space, the pressure prevailing in the space can be maintained substantially equal to the atmospheric pressure. For example, during a drop of the atmospheric pressure subatmospheric pressure will occur in the space due to the outward movement of the walls of the space as a result of which atmospheric air rich in oxygen will penetrate into the space. By feeding previously stored flushing gas this subatmospheric pressure can be avoided whilst the $CO_2/O_2$ concentrations in the space are substantially not affected.

In order to avoid exhaustion of a storage tank having variable contents due to lack of an adequate amount of flushing gas, the amount of flushing gas used for flushing should preferably be smaller than the amount of flushing gas stored per cycle.

The formation of flushing gas can be continued until flushing gas is gained up to a given fraction of the difference between the $O_2$ concentration of the gas mixture in the space, which fraction is chosen in dependence on the kind of goods to be stored in the space, for example, horticultural products, in which case for apples said fraction is about 0 to 0,5.

A further aspect of the invention relates to an apparatus for controlling the $CO_2/O_2$ concentrations of the gas mixture in at least one space, for example, a cooling cell intended for storing horticultural products comprising at least one adsorption apparatus provided with a blowing apparatus, an outlet and inlet duct of which can be coupled with an inlet and an outlet respectively of the space and being characterized by a storage tank for flushing gas that can be coupled with the outlet and inlet ducts of at least one adsorption apparatus.

When the apparatus is connected with at least two spaces, the $CO_2/O_2$ concentrations of which have to be controlled and when, for example, in one of the two spaces the $CO_2/O_2$ régime is less severe, the apparatus embodying the invention can be characterized by an order of succession of switching operations in which during regeneration the inlet duct of the adsorption apparatus is coupled for a given time with the outlet of one space and subsequently, during adsorption of $CO_2$ from the gas mixture present in the other space, the inlet and outlet ducts of the adsorption apparatus are coupled with the outlet and the inlet respectively of the other space.

The above-mentioned and further features of the invention will be described more fully with reference to the embodiments given by way of example and shown in the accompanying drawing.

The drawing shows in:

Fig. 1 an apparatus for controlling the $CO_2/O_2$ concentrations in at least three spaces; and

Fig. 2 and 3 schematically different embodiments of an apparatus in accordance with the invention.

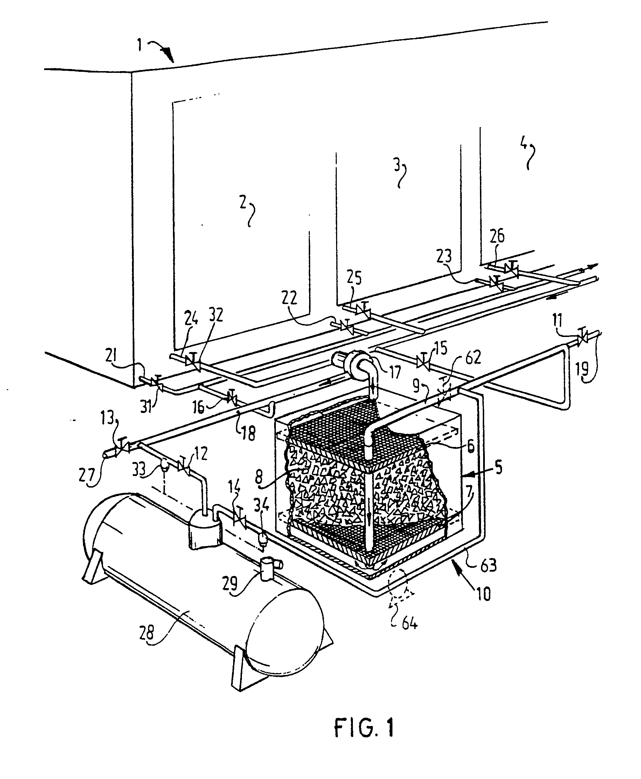

Fig. 1 shows an apparatus 10 embodying the invention for controlling the $CO_2/O_2$ concentrations of gas mixtures in the spaces 2, 3, 4 of a cold storage house 1. The apparatus 10 comprises an adsorption apparatus 5 comprising a packet of adsorption material 8, for example, active carbon sandwiched between two sieve plates 6, 7. The adsorption apparatus 5 has an inlet duct 9 and an outlet duct 18 provided with a blowing device 17. The outlet duct 18 and the inlet duct 9 can be coupled with the inlets 21, 22, 23 and the outlets 24, 25, 26 respectively of the spaces 2, 3 and 4. Besides, the air inlet duct 9 can be coupled with the inlet 19 for ambient air and the outlet duct 18 can be coupled with the outlet 27 opening out in the open air. In accordance with the invention the apparatus 10 furthermore comprises a flushing gas storage tank 28, which can be coupled with the inlet duct 9 and the outlet duct 18 of the adsorption apparatus 5. The storage tank 28 has a subatmospheric pressure valve 29 opening out in said tank. The apparatus 10 shown in Fig. 1 operates as follows.

For controlling the $CO_2/O_2$ concentrations of, for example, the space 2 the closing members 31 and 32 and the closing members 15 and 16 are opened, whereas the closing members 11, 12, 13 and 14 are closed. With the aid of the blower 17 the gas mixture is passed from the space 2 through the outlet 24 and the inlet duct 9 across the adsorption material 8 so that $CO_2$ is removed from the mixture whilst the $CO_2$-lean gas of the outlet duct 18 and the inlet 21 is again fed to the space 2. The adsorption process is stopped when, for example, the ratio between the $CO_2$ concentration in the outlet duct 18 and the $CO_2$ concentration in the cell has risen to the value 0.5.

At the beginning of the regeneration process, when the closing members 11 and 12 are open and the closing members 13, 14 15 and 16 are closed, the adsorption apparatus 5 is traversed by air from the surroundings and the mixture is stored in the storage tank 28, for example until the $O_2$ concentration of the flushing gas mixture stored in the tank 28 becomes substantially equal to half the difference between the $O_2$ concentration of the open air and the $O_2$ concentration of the gas mixture in the space 2. Then follows the regeneration process known in the prior art in which the closing members 11 and 13 are open and the closing members 12, 14, 15 and 16 are closed. The regeneration process is terminated, for example, when the ratio between the $CO_2$ concentration in the outlet duct 18 and that in the cell 2 becomes lower than or equal to a value of 0.25 to 0.33. Before restarting an adsorption process first the adsorption apparatus 5 is flushed with the flushing gas mixture of the storage tank 28 whilst the closing members 13 and 14 are open and the closing members 11, 12, 15 and 16 are closed. The amount of used flushing gas is a fraction smaller than the amount of flushing gas previously stored in the storage tank 28. By means of the measuring members 33, 34 the volume of flushing gas fed to the storage tank 28 and the volume of flushing gas withdrawn therefrom can be permanently measured and recorded.

It will be obvious that although the control of the $CO_2/O_2$ concentrations of the space 2 is only described for this space, the $CO_2/O_2$ concentrations of the spaces 2, 3 and 4 can be controlled in the same manner either separately or in conjunction.

Although this is not shown in Fig. 1 an additional nitrogen generator may, if necessary, be provided, which opens, for example, into the inlet duct 9.

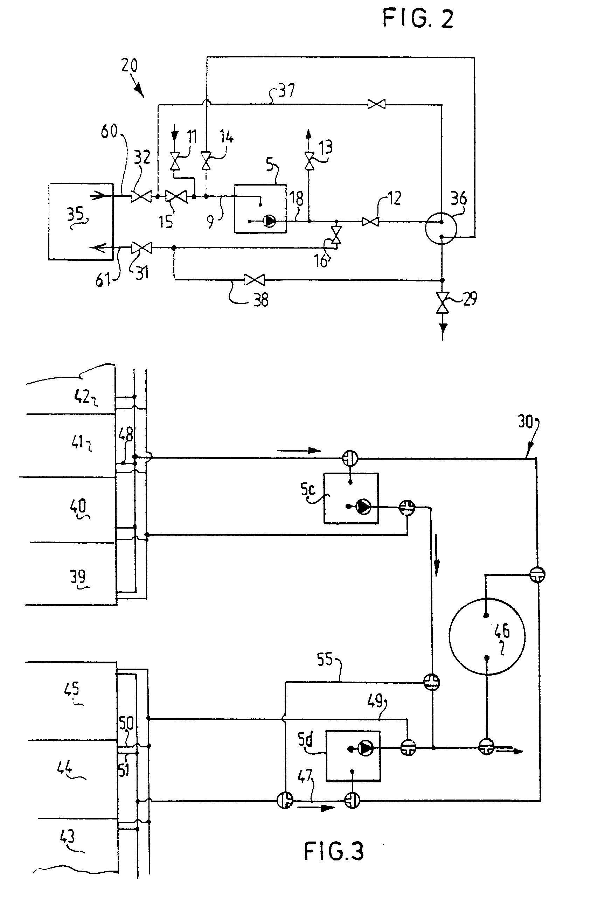

Fig. 2 shows a second embodiment of an apparatus 20 in accordance with the invention in which with the aid of an adsorption apparatus 5 the $CO_2/O_2$ concentrations of a space 35 can be controlled. Furthermore, a by-pass duct 37 is connected with the outlet 60 of the space 35 and with the store 36. In this way pressure differences between the atmospheric pressure and the pressure prevailing in the space 35, for example, due to weather variations can be obviated. In the case of subatmospheric pressure in the space 35 flushing gas mixture can be fed through the duct 38 from the store 36 to the space 35 so that penetration of atmospheric air through leaks is avoided.

The apparatus 10 shown in Fig. 1 may also be adapted for levelling out, in the spaces 2 to 4, a pressure difference between the pressure prevailing therein and the atmospheric pressure by arranging in the duct 9 a closing member 62 indicated by broken lines and, as the case may be, by including a blowing apparatus 64 in the duct 63.

Fig. 3 shows a third embodiment of an apparatus 30 in accordance with the invention in which the $CO_2/O_2$ concentrations are controlled in the spaces 39 to 42 and 43 to 45, for example, to 3% $CO_2$ and 3% $O_2$ in the spaces 39 to 42 and to a severe régime (for example, 1% $CO_2$ anb 2 to 2,5% $O_2$) in the spaces 43 to 45. This severe régime is sometimes termed ULO storage (Ultra Low Oxygen). With the aid of the adsorption apparatus 5c and 5d, which can be connected in series in this case, each of the groups of spaces 39 to 42 and 43 to 45 can be separately controlled by means of the storage tank 46. In the situation illustrated in Fig. 3 a flushing gas mixture consisting, in fact, of the gas mixture from one of the spaces 39 to 42, from which $CO_2$ is scrubbed with the aid of the adsorption apparatus 5c is fed to the adsorption apparatus 5d for removing therefrom the gas mixture present therein at the end of the regeneration process. In this situation the flushing gas mixture is not temporarily stored in a storage tank, but it has been in contact previously with an adsorption material in the adsorption apparatus 5c. The gas mixture from the adsorption apparatus 5c has a sufficiently low $O_2$ concentration so that only very slight disturbance of the oxygen concentration in one of the spaces 43 to 45 will occur when the adsorption apparatus 5d is switched into the adsorption process. In the case of Fig. 3 the order of succession of switching operations is characterized in that during regeneration the inlet duct 47 of the adsorption apparatus 5d is coupled via the duct 55 with the outlet 48 of, for example, one space 41 and subsequently during the absorption phase for adsorbing $CO_2$ form the gas mixture in, for example, the other space 44 the inlet duct 47 and the outlet duct 49 of the adsorption apparatus 5d are coupled with the inlet 50 and the outlet 51 respectively of said other space 44.

Although not described in detail, it will be obvious that by means of the apparatus 10, 20 and 30 embodying the invention it is also possible to remove the ethene produced by horticultural products, apart from $CO_2$, since the adsorption material used, for example, active carbon also has an affinity for ethene. A low ethene concentration has been found to slow down the maturation of some horticultural products.

The above-described apparatus embodying the invention are particularly suitable for ULO (Ultra-Low Oxygen) storage because in this case as a result of the low $CO_2$ concentration to be maintained in the cooling cell it is necessary to change over a greater number of times from the adsorption phase to the regeneration phase in order to maintain a sufficiently high value of the distinguishing number i.e. the ratio between the amount of $CO_2$ adsorbed from the cooling cell and the amount of $CO_2$ fed to the cooling cell.

Since the control of the apparatus embodying the invention can be performed in many different ways known in the art it is not described in detail and the drawing does not show the energizable closing members and measuring cells concerned.

## Claims

1. A method of controlling the $CO_2/O_2$ concentrations of a gas mixture in at least one space (2—4; 35; 39—42), for example, a cooling cell intended to store horticultural products, comprising the alternate performance of an adsorption process in which $CO_2$ is adsorbed from the gas mixture on an adsorption material (8) and a regeneration process in which $CO_2$ adsorbed at the adsorption material (8) is removed from the adsorption material (8) with the aid of air, characterized in that at the beginning of the regeneration process at least part of the gas mixture having been in contact with the adsorption material (8) is stored and in that after the termination of the regeneration with air the adsorption material (8) is flushed with at least part of the stored gas mixture, the gas released during flushing being passed into the atmosphere.

2. A method as claimed in claim 1 characterized in that the amount of flushing gas used for flushing is smaller than the amount of flushing gas stored per cycle.

3. A method as claimed in claim 1 or 2 characterized in that flushing gas is directly fed to the space (2—4; 35; 39—45).

4. A method as claimed in claim 1 characterized in that the flushing gas is withdrawn from a further space (39—42), for example, a cooling cell operating in a less severe régime, the $CO_2/O_2$ concentrations of which are controlled.

5. A method as claimed in claims 1 to 4 characterized in that the flushing gas is gained up to a given fraction of the difference between the $O_2$ concentration of the open air and the $O_2$ concentration of the gas mixture in the space.

6. A method as claimed in claim 5 characterized in that the fraction is chosen in dependence on the kind of goods to be stored in the space, for example, horticultural products.

7. A method as claimed in claim 6 characterized in that for apples said fraction is substantially equal to 0 to 0.5.

8. An apparatus (10; 20; 30) for controlling the $CO_2/O_2$ concentrations of a gas mixture in at least one space (2—4; 35; 39—42), for example, a cooling cell intended for storing horticultural products comprising at least one adsorption apparatus (5) provided with a blowing apparatus (17), an outlet (18) and an inlet duct (9) which can be coupled with an inlet (21—23; 61; 50) and an outlet (24—26; 60; 48, 51) respectively of the space (2—4, 35; 44, 48) characterized by a storing tank (28; 36; 46) for flushing gas coupled with the outlet (18) and the inlet ducts (19) of at least one adsorption apparatus (5).

9. An apparatus (20) as claimed in claim 8 characterized in that the storage tank (36) can be directly coupled through a by-pass (38; 37) with the inlet (61), or the outlet (60) of the space (35).

10. An apparatus (10) as claimed in claim 8 or 9 characterized in that the storage tank (28) is provided with an excess pressure valve (29).

11. An apparatus (10) as claimed in claims 8 to 10 characterized by means (33, 34) for measuring the amount of flushing gas fed to and conducted away from the storage tank (28).

**Patentansprüche**

1. Verfahren zum Kontrollieren von $CO_2/O_2$-Konzentrationen eines Gasgemischs in wenigstens einem Raum (2—4; 35; 39—42), beispielsweise einer zur Lagerung von Gartenbauprodukten bestimmten Kühlzelle, umfassend die abwechselnde Durchführung eines Adsorptions-Prozesses, in welchem $CO_2$ aus dem Gasgemisch an einem Adsorptionsmaterial (8) adsorbiert wird, und einen Regenerierprozeß, in welchem an dem Adsorptionsmaterial (8) adsorbiertes $CO_2$ mit Hilfe von Luft von dem Adsorptionmaterial (8) wieder entfernt wird, dadurch gekennzeichnet, daß am Beginn des Regenerierprozesses wenigstens ein Teil des mit dem Adsorptionsmaterial (8) in Kontakt gewesenen Gasgemischs gespeichert wird, und daß nach der Beendigung der Regenerierung mit Luft das Adsorptionsmaterial (8) mit wenigstens einem Teil des gespeicherten Gasgemischs gespült wird, wobei das während der Spülung freigesetzte Gas in die Atmosphäre geleitet wird.

2. Verfahren nach Anspruch 1, dadurch gekennzeichnet, daß die Menge des zum Spülen verwendeten Spülgases kleiner als die Menge des je Zyklus gespeicherten Spülgases ist.

3. Verfahren nach Anspruch 1 oder 2, dadurch gekennzeichnet, daß das Spülgas direkt dem Raum (2—4; 35; 39—45) zugeführt wird.

4. Verfahren nach Anspruch 1, dadurch gekennzeichnet, daß das Spülgas von einem weiteren Raum (39—42) entnommen wird, beispielsweise einer unter weniger strengen Bedingungen betriebenen Kühlzelle, deren $CO_2/O_2$ Konzentrationen kontrolliert sind.

5. Verfahren nach den Ansprüchen 1 bis 4, dadurch gekennzeichnet, daß das Spülgas gewonnen wird bis zu einem gegebenen Bruchteil des Unterschieds zwischen der $O_2$-Konzentration der freien oder Außenluft und der $O_2$-Konzentration des Gasgemischs in dem Raum.

6. Verfahren nach Anspruch 5, dadurch gekennzeichnet, daß der Bruchteil in Abhängigkeit von der jeweiligen Art des in dem Raum zu lagernden Aufbewahrungsgutes, beispielsweise der Gartenbauprodukte, gewählt wird.

7. Verfahren nach Anspruch 6, dadurch gekennzeichnet, daß für Äpfel der genannte Bruchteil im wesentlichen 0 bis 0,5 beträgt.

8. Vorrichtung (10; 20; 30) zum Kontrollieren der $CO_2O_2$-Konzentrationen eines Gasgemischs in wenigstens einem Raum (2—4; 35; 39—42), beispielsweise einer zur Lagerung von Gartenbauprodukten bestimmten Kühlzelle, umfassend wenigstens eine Adsorptionsvorrichtung (5), die mit einer Gebläsevorrichtung (17), einer Austritts-(18) sowie einer Eintrittsleitung (9) versehen ist, welche entsprechend mit einem Einlaß (21—23; 61; 50) bzw. einem Auslaß (24—26; 60; 48, 51) des Raums (2—4; 35; 44, 48) verbindbar sind, gekennzeichnet, durch einen Speichertank (28; 36; 46) für Spülgas, der mit den Austritts- (18) und Eintrittsleitungen (19) wenigstens einer Adsorptionsvorrichtung (5) verbunden ist.

9. Vorrichtung (20) nach Anspruch 8, dadurch gekennzeichnet, daß der Speichertank (36) direkt über einen Bypass (38; 37) mit dem Einlaß (6) oder dem Auslaß (60) des Raums (35) verbunden werden kann.

10. Vorrichtung (10) nach Anspruch 8 oder 9, dadurch gekennzeichnet, daß der Speichertank (28) mit einem Überdruckventil (29) versehen ist.

11. Vorrichtung (10) nach den Ansprüchen 8 bis 10, gekennzeichnet durch Mittel (33, 34) zur Messung der Menge des dem Speichertank (28) zu- und des aus ihm herausgeführten Spülgases.

**Revendications**

1. Procédé pour ajuster les concentrations en $CO_2$ et en $O_2$ d'un mélange de gaz dans au moins une enceinte (2 à 4; 35; 39 à 42), par exemple une cellule de refroidissement destinée à la conservation de produits horticoles, dans lequel on met alternativement en oeuvre un processus d'adsorption dans lequel du $CO_2$ est adsorbé à partir d'un mélange de gaz sur un matériau d'adsorption (8) et un processus de régénération dans lequel le $CO_2$ adsorbé sur le matériau d'adsorption (8) est séparé du matériau d'adsorption (8) à l'aide d'air, caractérisé en ce qu'au début du processus de régénération, au moins une partie du mélange de gaz qui a été en contact avec le matériau d'adsorption (8), est stockée et en ce qu'après la fin de la régénération à l'aide d'air, le matériau d'adsorption (8) est épuré avec au moins une partie du mélange de gaz stocké, le gaz libéré pendant l'épuration passant dans l'atmosphère.

2. Procédé suivant la revendication 1, caractérisé en ce que la quantité de gaz d'épuration utilisée pour l'épuration, est plus faible que la quantité de gaz d'épuration stockée par cycle.

3. Procédé suivant la revendication 1 ou 2, caractérisé en ce que le gaz d'épuration est directement introduit dans l'enceinte (2 à 4; 35; 39 à 45).

4. Procédé suivant la revendication 1, caractérisé en ce que le gaz d'épuration est extrait d'une autre enceinte (39 à 42), par exemple une cellule de refroidissement fonctionnant dans des conditions moins rigoureuses les concentrations en $CO_2$ et en $O_2$ de celui-ci étant adjustées.

5. Procédé suivant les revendications 1 à 4, caractérisé en ce que le gaz d'épuration a gagné jusqu'à une fraction donnée de la différence entre la concentration en $O_2$ de l'air ambiant et la concentration en $O_2$ du mélange de gaz dans l'enceinte.

6. Procédé suivant la revendication 5, caractérisé en ce que la fraction est choisie en fonction du type de denrée destinée à être conservée dans l'enceinte, par exemple des produits horticoles.

7. Procédé suivant la revendication 6, caractérisé en ce que pour des pommes, ladite fraction est à peu près de 0 à 0,5.

8. Appareil (10; 20; 30) pour ajuster les concentrations en $CO_2$ et en $O_2$ d'un mélange de gaz dans au moins une enceinte (2 à 4; 35; 39 à 42), par exemple une cellule de refroidissement destinée à conserver des produits horticoles, comprenant au moins un dispositif d'adsorption (5) comportant une soufflerie (17), un conduit de sortie (18) et un conduit d'entrée (9) qui peuvent être reliés respectivement à un conduit d'entrée (21 à 23; 61; 50) et à un conduit de sortie (24 à 26; 60; 48; 51) de l'enceinte (2 à 4; 35; 44, 48), caractérisé en ce qu'il est prévu un réservoir de stockage (28; 36; 46) pour le gaz d'épuration, relié au conduit de sortie (18) et au conduit d'entrée (19) d'au moins un dispositif d'adsorption (5).

9. Appareil suivant la revendication 8, caractérisé en ce que le réservoir de stockage (36) peut être relié directement par l'intermédiaire d'un conduit de dérivation (38; 37) au conduit d'entrée (61) ou au conduit de sortie (60) de l'enceinte (35).

10. Appareil (10) suivant la revendication 8 ou 9, caractérisé en ce que le réservoir de stockage (28) est muni d'une soupape de décharge d'excès de pression (29).

11. Appareil (10) suivant les revendications 8 à 10, caractérisé en ce qu'il est prévu des moyens (33, 34) pour mesurer la quantité de gaz d'épuration introduite dans le réservoir de stockage (28) et évacuée de celui-ci.

FIG. 1

FIG. 2

FIG.3